# EUROPEAN PATENT APPLICATION

(11) **EP 4 755 927 A1**
(43) Date of publication of application: **10.06.2026**
(21) Application number: 24851723.7
(22) Date of filing: 31.07.2024
(51) Int. Cl.: C08C 19/08, C08J 11/12

(54) **METHOD FOR DECOMPOSING ORGANIC MATERIAL**

(30) Priority: 04.08.2023 JP 2023128063
(71) Applicant: BRIDGESTONE CORPORATION, Chuo-ku Tokyo 104-8340 (JP); Tohoku University, Sendai-shi, Miyagi 980-8577 (JP)
(72) Inventor: HOJO, Masahiro, Tokyo 104-8340 (JP); HOMMA, Masahiro, Tokyo 104-8340 (JP); TAHARA, Seiichi, Tokyo 104-8340 (JP); YOSHIOKA, Toshiaki, Sendai-shi, Miyagi 980-8577 (JP); KUMAGAI, Shogo, Sendai-shi, Miyagi 980-8577 (JP)
(74) Representative: Marks & Clerk LLP
(86) International application number: PCT/JP2024/027419
(87) International publication number: WO 2025/033298

(57) **Abstract**

With the aim of providing a method for decomposing an organic material capable of yielding C4-C10 chemicals, particularly diene-based monomers, at a high yield, a method for decomposing an organic material includes heating an organic material selected from crosslinked rubber containing diene rubber, uncrosslinked rubber containing diene rubber, and a diene-based liquid polymer under an inert gas atmosphere, at a heating rate of 800°C/min or more, and preferably 2000°C/min or more, from 100°C to 450°C, and performing thermal decomposition at 450°C to 950°C, or at a heating rate of 800°C/min or more, and preferably 2000°C/min or more, from 100°C to 600°C, and performing thermal decomposition at 650°C to 950°C.

## Description

### TECHNICAL FIELD

The present disclosure relates to a method for decomposing an organic material.

### BACKGROUND

Conventionally, rubber products mainly composed of crosslinked rubber such as vulcanized rubber are difficult to reuse, and after the end of their product life, they are often reused as fuel, particularly in cement plants and the like. However, in recent years, with the growing awareness of environmental issues, there is a demand for the development of methods for reusing materials obtained by decomposing rubber products, rather than incinerating rubber products as fuel.

There are various methods for decomposing crosslinked rubber, for example, techniques for thermally decomposing crosslinked rubber at high temperatures, and techniques for obtaining a liquid polymer by desulfurizing and depolymerizing vulcanized rubber are known. In addition, PTL 1 discloses a method for decomposing polyisoprene-based rubber using microorganisms.

Furthermore, in the manufacturing process of rubber products, rubber material in an uncrosslinked state may be discarded as scrap, and there is also a demand for the development of methods for reusing such uncrosslinked rubber.

### CITATION LIST

### Patent Literature

PTL 1: JP 2009-247241 A

### SUMMARY

### (Technical Problem)

As described above, there are various methods for decomposing crosslinked rubber, but from the viewpoint of further improving the recyclability of crosslinked rubber, it is important to increase the yield of chemicals, particularly diene-based monomers, obtained by decomposition. In addition, for organic materials such as liquid polymers obtained by desulfurizing and depolymerizing vulcanized rubber or uncrosslinked rubber, it is also important to increase the yield of chemicals from the viewpoint of further improving recyclability.

However, as described above, when crosslinked rubber is thermally decomposed at high temperatures, or when organic materials such as uncrosslinked rubber or liquid polymers are thermally decomposed at high temperatures, the decomposition products tend to be gasified or converted into polycyclic aromatic compounds, and the yield of C4-C10 chemicals, particularly diene-based monomers, cannot be sufficiently increased. Furthermore, as in the technique disclosed in PTL 1, when crosslinked rubber is decomposed using microorganisms, a long time is required for decomposition, and there is also a problem in that the yield of C4-C10 chemicals, particularly diene-based monomers, is low.

Therefore, the present disclosure addresses the above problems of the prior art, and an object thereof is to provide a method for decomposing an organic material capable of yielding C4-C10 chemicals, particularly diene-based monomers, at a high yield.

### (Solution to Problem)

The gist of the method for decomposing an organic material of the present disclosure for solving the above problems is as follows.
[1] A method for decomposing an organic material comprising heating an organic material selected from crosslinked rubber containing diene rubber, uncrosslinked rubber containing diene rubber, and a diene-based liquid polymer under an inert gas atmosphere, at a heating rate of 800°C/min or more from 100°C to 450°C, and performing thermal decomposition at 450°C to 950°C.
[2] A method for decomposing an organic material comprising heating an organic material selected from crosslinked rubber containing diene rubber, uncrosslinked rubber containing diene rubber, and a diene-based liquid polymer under an inert gas atmosphere, at a heating rate of 800°C/min or more from 100°C to 600°C, and performing thermal decomposition at 650°C to 950°C.
[3] A method for decomposing an organic material comprising heating an organic material selected from crosslinked rubber containing diene rubber, uncrosslinked rubber containing diene rubber, and a diene-based liquid polymer under an inert gas atmosphere, at a heating rate of 2000°C/min or more from 100°C to 450°C, and performing thermal decomposition at 450°C to 950°C.
[4] A method for decomposing an organic material comprising heating an organic material selected from crosslinked rubber containing diene rubber, uncrosslinked rubber containing diene rubber, and a diene-based liquid polymer under an inert gas atmosphere, at a heating rate of 2000°C/min or more from 100°C to 600°C, and performing thermal decomposition at 650°C to 950°C.
[5] The method for decomposing an organic material according to any one of [1] to [4], wherein the thermal decomposition is performed at 650°C to 850°C.
[6] The method for decomposing an organic material according to any one of [1] to [5], wherein a decomposition product obtained by the thermal decomposition contains 15 mass% or more of a diene-based monomer.
[7] The method for decomposing an organic material according to any one of [1] to [6], wherein the diene rubber contains at least one selected from the group consisting of isoprene skeleton rubber, styrene-butadiene rubber, and butadiene rubber.
[8] The method for decomposing an organic material according to any one of [1] to [7], wherein the diene rubber contains 30 mass% or more of isoprene skeleton rubber.
[9] The method for decomposing an organic material according to any one of [1] to [8], wherein the crosslinked rubber or the uncrosslinked rubber further contains carbon black.
[10] The method for decomposing an organic material according to any one of [1] to [9], wherein the crosslinked rubber or the uncrosslinked rubber further contains sulfur.

### (Advantageous Effect)

According to the present disclosure, it is possible to provide a method for decomposing an organic material capable of yielding C4-C10 chemicals, particularly diene-based monomers, at a high yield.

### DETAILED DESCRIPTION

Hereinafter, the method for decomposing an organic material according to the present disclosure will be exemplified and described in detail based on its embodiments.

### <Definitions>

The compounds described in the present specification may be partially or entirely derived from fossil resources, derived from biological resources such as plant resources, or derived from recycled resources such as used tires. Further, they may be derived from a mixture of any two or more of fossil resources, biological resources, and recycled resources.

### <Method for Decomposing Organic Material>

The method for decomposing an organic material according to the present embodiment is characterized in that an organic material selected from crosslinked rubber containing diene rubber, uncrosslinked rubber containing diene rubber, and a diene-based liquid polymer is heated under an inert gas atmosphere at a heating rate of 800°C/min or more from 100°C to 450°C, and thermally decomposed at 450°C to 950°C.

In a preferred embodiment, an organic material selected from crosslinked rubber containing diene rubber, uncrosslinked rubber containing diene rubber, and a diene-based liquid polymer is heated under an inert gas atmosphere at a heating rate of 800°C/min or more from 100°C to 650°C, and thermally decomposed at 650°C to 950°C.

In another preferred embodiment, an organic material selected from crosslinked rubber containing diene rubber, uncrosslinked rubber containing diene rubber, and a diene-based liquid polymer is heated under an inert gas atmosphere at a heating rate of 2000°C/min or more from 100°C to 450°C, and thermally decomposed at 450°C to 950°C.

In yet another preferred embodiment, an organic material selected from crosslinked rubber containing diene rubber, uncrosslinked rubber containing diene rubber, and a diene-based liquid polymer is heated under an inert gas atmosphere at a heating rate of 2000°C/min or more from 100°C to 650°C, and thermally decomposed at 650°C to 950°C.

The inventors of the present disclosure, as a result of intensive studies to solve the above problems, have found that in conventional methods for decomposing organic materials such as crosslinked rubber, uncrosslinked rubber, and liquid polymers, decomposition of the organic material begins during heating, and decomposition products with a higher molecular weight than C4-C10 chemicals (particularly diene-based monomers), such as oligomers, are generated and volatilized at temperatures lower than the target temperature, resulting in a low yield of C4-C10 chemicals (particularly diene-based monomers) even when thermal decomposition is performed at the target temperature.

In contrast, in the method for decomposing an organic material according to the present embodiment, since the organic material is rapidly heated under an inert gas atmosphere at a heating rate of 800°C/min or more from 100°C to 450°C, the proportion of organic material decomposed during heating is reduced, and the generation of high molecular weight decomposition products (such as oligomers) from the organic material can be suppressed. Furthermore, in the method for decomposing an organic material according to the present embodiment, by performing thermal decomposition under an inert gas atmosphere at a target temperature of 450°C to 950°C, it is possible to suppress hydrogenation of double bonds in the skeleton (such as isoprene skeleton, butadiene skeleton) of the constituent monomers of the diene rubber or diene-based liquid polymer, as well as oxidation of decomposition products, thereby improving the yield of C4-C10 chemicals (particularly diene-based monomers) from the organic material.

Accordingly, according to the method for decomposing an organic material of the present embodiment, it is possible to improve the yield of C4-C10 chemicals, particularly diene-based monomers, ultimately obtained from the organic material.

### (Organic Material)

The organic material to be decomposed by the decomposition method of the present embodiment is selected from crosslinked rubber containing diene rubber, uncrosslinked rubber containing diene rubber, and a diene-based liquid polymer. These organic materials may be used alone or as a mixture of two or more kinds.

The crosslinked rubber and uncrosslinked rubber contain diene rubber, and may further contain carbon black, sulfur, and the like.

The crosslinked rubber and uncrosslinked rubber used for decomposition may be grouped in advance according to the type of diene rubber blended therein, and thermal decomposition may be performed for each group. Alternatively, grouping may be performed according to the type of filler blended in advance (for example, the type of carbon black, the type of silica, the mixing ratio of carbon black and silica, etc.), and thermal decomposition may be performed for each group. Furthermore, both grouping by type of diene rubber and grouping by type of filler may be performed, and thermal decomposition may be performed for each group. When thermal decomposition is performed for each group in this way, recovered carbon black, recovered silica, and the like having more uniform physical properties can be obtained, and when blended again into a rubber composition, a rubber composition with better performance can be obtained.

Further, when the crosslinked rubber used for decomposition is derived from tires, grouping may be performed in advance according to the type of tire (for example, for passenger vehicles, for trucks and buses, for large vehicles such as off-road vehicles, for aircraft, for agricultural vehicles, etc.), and thermal decomposition may be performed for each group. Alternatively, grouping may be performed in advance according to the type of tire component (for example, tread rubber, sidewall rubber, bead portion rubber, steel cord coating rubber, organic fiber coating rubber, pad rubber, cushion rubber, etc.), and thermal decomposition may be performed for each group. Furthermore, both grouping by tire type and grouping by tire component may be performed, and thermal decomposition may be performed for each group. When thermal decomposition is performed for each group in this way, recovered carbon black and the like having more uniform physical properties can be obtained, and when blended again into a rubber composition, a rubber composition with better performance can be obtained.

The form of the crosslinked rubber is not particularly limited, and may be, for example, powdered rubber or the like. Such powdered rubber can be obtained by cutting and pulverizing used rubber products such as waste tires. The pulverization process may include multiple steps such as a preliminary pulverization step and a fine pulverization step, and after the pulverization process, a classification step may be performed to adjust the particle size of the powdered rubber to be used.

The form of the uncrosslinked rubber is also not particularly limited, and examples include scraps of unvulcanized rubber sheets discarded during the manufacturing process of rubber products.

The crosslinked rubber may be waste rubber subjected to recycling, used rubber products, or the like. Waste rubber refers to all discarded rubber, including not only that generated from rubber products but also unnecessary scraps generated during production or repair of rubber products. Examples of scraps include buffing powder, peeling rubber, and the like. Buffing powder is, for example, fine rubber generated in the buffing process in tire retreading, where the tread portion remaining on the base tire is shaved off. Peeling rubber is, for example, long rubber strips about 1-2 cm wide peeled from the surface of rubber products such as tires. Peeling rubber is generated by shaving the surface of rubber products such as tires using a knife with a U-shaped or V-shaped tip as a peeler. Rubber products include, for example, final products such as tires, rubber hoses, rubber conveyor belts, and rubber parts or components at the manufacturing stage of final products. Used tires may be those subjected to retreading, or waste tires generated due to tire replacement, vehicle scrapping, or the like, as well as ELT (End-of-Life Tire) that have reached the end of their service life as tires, or any tires discarded for any reason.

### - Diene Rubber -

The diene rubber is rubber containing units (diene units) derived from diene-based monomers, and may further contain units derived from copolymerizable comonomers.

The units derived from diene-based monomers enable crosslinking (vulcanization) of the diene rubber and impart elongation and strength characteristic of rubber. In crosslinked rubber, the diene rubber is usually present in a crosslinked state, but a part thereof may be uncrosslinked. Specific examples of diene-based monomers (diene compounds) include 1,3-butadiene, isoprene, 1,3-pentadiene, 2,3-dimethyl-1,3-butadiene, and the like. Among these, 1,3-butadiene and isoprene are preferred, and isoprene is particularly preferred.

On the other hand, examples of copolymerizable comonomers include aromatic vinyl compounds. Specific examples of such aromatic vinyl compounds include styrene, o-methylstyrene, m-methylstyrene, p-methylstyrene, o,p-dimethylstyrene, o-ethylstyrene, m-ethylstyrene, p-ethylstyrene, and the like.

Furthermore, the diene rubber may be not only rubber that is rubbery at 25°C, but may also be rubber of low molecular weight that is liquid at 25°C. As the liquid rubber, not only commercially available diene-based liquid polymers but also diene-based liquid polymers obtained by desulfurization and depolymerization of vulcanized rubber may be used. From the viewpoint of the objectives of the present disclosure, it is more desirable from the perspective of resource circulation to use a diene-based liquid polymer obtained from vulcanized rubber.

The method for desulfurization and depolymerization of vulcanized rubber is not particularly limited, and examples include methods using heat, shear, solvent heat treatment, catalysts, radical generators such as sulfur or peroxides, and supercritical conditions of carbon dioxide. The weight-average molecular weight (Mw) of the diene-based liquid polymer obtained from vulcanized rubber is usually 500 or more and 300,000 or less, preferably 1,000 or more and 250,000 or less. If the weight-average molecular weight of the diene-based liquid polymer is less than 200, some may be volatile and difficult to handle from the viewpoint of flammability. If the weight-average molecular weight exceeds 300,000, it is semi-solid and difficult to handle.

As the diene-based liquid polymer derived from vulcanized rubber, it is preferable that the units (diene units) derived from diene-based monomers remain at an average of 30 mass% or more, and from the viewpoint of monomer yield, preferably 50 mass% or more, and more preferably 70 mass% or more. If the residual proportion of diene units is less than 30 mass%, the yield of diene-based monomers after decomposition is low, and it is difficult to sufficiently achieve the effects of the present disclosure.

The diene-based liquid polymer may contain carbon black, silica, zinc white, sulfur, vulcanization accelerators, antioxidants, and their decomposition products, but from the viewpoint of ensuring fluidity, it is desirable that solid components are removed.

Examples of the diene rubber include isoprene skeleton rubber, styrene-butadiene rubber (SBR), butadiene rubber (BR), chloroprene rubber (CR), and the like. Here, isoprene skeleton rubber refers to rubber having isoprene units as the main skeleton, and specific examples include natural rubber (NR), synthetic isoprene rubber (IR), and the like. Among these, it is preferable that the diene rubber contains at least one selected from the group consisting of isoprene skeleton rubber, styrene-butadiene rubber, and butadiene rubber, and isoprene skeleton rubber is particularly preferred. When the diene rubber contains at least one selected from the group consisting of isoprene skeleton rubber, styrene-butadiene rubber, and butadiene rubber, diene-based monomers such as isoprene and butadiene, which are easy to reuse, can be obtained by decomposing the crosslinked rubber or uncrosslinked rubber.

The content of the diene rubber in the crosslinked rubber and uncrosslinked rubber is not particularly limited, and is preferably in the range of 10 to 100 mass%, and more preferably in the range of 30 to 100 mass% from the viewpoint of further improving the yield of diene-based monomers.

Among diene rubbers, isoprene skeleton rubber is preferred from the viewpoint of further improving the yield of isoprene monomer, and the content of isoprene skeleton rubber in the diene rubber is more preferably in the range of 30 to 100 mass%.

### - Carbon Black -

The crosslinked rubber and uncrosslinked rubber may further contain carbon black. The carbon black is not particularly limited, and examples of carbon black grades include N134, N110, N220, N234, N219, N339, N330, N326, N351, N550, N762, and the like.

Even when the organic material to be decomposed in the method for decomposing an organic material according to the present embodiment is crosslinked rubber or uncrosslinked rubber, in the above thermal decomposition, the diene rubber in the crosslinked rubber or uncrosslinked rubber can be decomposed to, for example, oligomers or monomers, thereby reducing the molecular weight. Therefore, even if the crosslinked rubber or uncrosslinked rubber contains carbon black, the carbon black can be easily separated and recovered after thermal decomposition by, for example, centrifugation or filtration, and the recovered carbon black can be reused.

The content of carbon black in the crosslinked rubber and uncrosslinked rubber is not particularly limited, and is, for example, in the range of 10 to 150 parts by mass per 100 parts by mass of the diene rubber, and preferably in the range of 30 to 120 parts by mass.

Further, the content of carbon black in the crosslinked rubber and uncrosslinked rubber is preferably 20 mass% or more, more preferably 30 mass% or more, and preferably 40 mass% or less, more preferably 35 mass% or less. When the content of carbon black in the crosslinked rubber and uncrosslinked rubber is 20 mass% or more, the amount of recoverable carbon black increases.

### - Sulfur -

The crosslinked rubber and uncrosslinked rubber may further contain sulfur. In crosslinked rubber, sulfur is usually present in a state of crosslinking the diene rubber (as a bridge of the diene rubber), but some thereof may be free. Even when the organic material to be decomposed in the method for decomposing an organic material according to the present embodiment is crosslinked rubber or uncrosslinked rubber, in the above thermal decomposition, the diene rubber in the crosslinked rubber or uncrosslinked rubber can be decomposed to, for example, oligomers or monomers, thereby reducing the molecular weight. Therefore, even if the crosslinked rubber or uncrosslinked rubber contains sulfur, the sulfur can be easily recovered after thermal decomposition by, for example, centrifugation or filtration, and the recovered sulfur can be reused.

The content of sulfur in the crosslinked rubber and uncrosslinked rubber is not particularly limited, and is, for example, in the range of 0.1 to 10 parts by mass per 100 parts by mass of the diene rubber, and preferably in the range of 1 to 5 parts by mass.

### - Other Components -

The crosslinked rubber and uncrosslinked rubber may further contain, in addition to the above diene rubber, carbon black, and sulfur, various components commonly used in the rubber industry, such as rubber components other than diene rubber, fillers other than carbon black (silica, calcium carbonate, etc.), silane coupling agents, antioxidants, softeners, processing aids, resins, surfactants, organic acids (such as stearic acid), zinc oxide (zinc white), vulcanization accelerators, crosslinking agents other than sulfur (such as peroxides), and the like.

### (Heating Conditions)

In the method for decomposing an organic material according to the present embodiment, an organic material selected from crosslinked rubber containing diene rubber, uncrosslinked rubber containing diene rubber, and a diene-based liquid polymer is heated under an inert gas atmosphere at a heating rate of 800°C/min or more from 100°C to 450°C (heating step). If the heating rate from 100°C to 450°C is less than 800°C/min, the proportion of organic material decomposed during heating increases, and decomposition products with a higher molecular weight than diene-based monomers, such as oligomers, are generated and volatilized from the organic material during heating (i.e., at a temperature lower than the target decomposition temperature), resulting in a decrease in the yield of C4-C10 chemicals (particularly diene-based monomers) ultimately obtained. The heating rate from 100°C to 450°C is preferably 2000°C/min or more, and when the heating rate is 2000°C/min or more, the generation of high molecular weight decomposition products from the organic material can be further suppressed.

In a preferred embodiment, an organic material selected from crosslinked rubber containing diene rubber, uncrosslinked rubber containing diene rubber, and a diene-based liquid polymer is heated under an inert gas atmosphere at a heating rate of 800°C/min or more from 100°C to 600°C (heating step). When the heating rate from 100°C to 600°C is 800°C/min or more, the proportion of organic material decomposed during heating decreases, and the generation and volatilization of decomposition products with a higher molecular weight than diene-based monomers, such as oligomers, from the organic material during heating (i.e., at a temperature lower than the target decomposition temperature) can be suppressed, thereby improving the yield of C4-C10 chemicals (particularly diene-based monomers) ultimately obtained. The heating rate from 100°C to 600°C is preferably 2000°C/min or more, and when the heating rate is 2000°C/min or more, the generation of high molecular weight decomposition products from the organic material can be further suppressed, and the yield of C4-C10 chemicals (particularly diene-based monomers) can be further improved.

In the method for decomposing crosslinked rubber according to the present embodiment, the diene-based liquid polymer may be mixed with at least one medium selected from organic solvents, fatty acid esters, and hydrocarbons, and the mixture may be thermally decomposed.

As the organic solvent, any solvent that does not inhibit the decomposition reaction may be used, and examples include aromatic hydrocarbons (aromatic solvents), chlorinated hydrocarbons, aliphatic hydrocarbons, alicyclic hydrocarbons, ethers, nitriles, esters, and the like.

Specifically, examples of aromatic hydrocarbons include toluene, xylene, ethylbenzene, trimethylbenzene, propylbenzene, and the like; examples of chlorinated hydrocarbons include chloroform, dichloromethane, dichloroethane, trichloroethane, tetrachloroethane, tetrachloroethene, chlorobenzene, dichlorobenzene, and the like; examples of aliphatic hydrocarbons include pentane, hexane, octane, and the like; examples of alicyclic hydrocarbons include cyclohexane, cyclooctane, and the like; examples of ethers include tetrahydrofuran, methyl tetrahydrofuran, tetrahydropyran, dioxane, and the like; examples of nitriles include benzonitrile and the like; and examples of esters include ethyl acetate, propyl acetate, butyl acetate, ethyl propionate, butyl propionate, and the like.

Among these, from the viewpoint of reaction rate and ease of availability, aromatic hydrocarbons are preferred. Specific examples thereof include toluene, xylene, ethylbenzene, and the like. Among aromatic hydrocarbons, from the viewpoint of reaction rate, ethylbenzene is preferred over toluene.

As the fatty acid ester, esters of fatty acids and alcohols such as glycerin or aliphatic alcohols may be used. Here, examples of fatty acids include myristic acid, palmitic acid, palmitoleic acid, stearic acid, oleic acid, linoleic acid, linolenic acid, erucic acid, and the like, and the aliphatic alcohol preferably has a carbon number of 12 to 24. Specific examples of the fatty acid ester include rapeseed oil, soybean oil, olive oil, sunflower oil, safflower oil, corn oil, castor oil, jojoba oil, palm oil, and the like. These may be hydrogenated, and examples of hydrogenated fatty acid esters include hydrogenated rapeseed oil, hydrogenated jojoba oil, and the like. These fatty acid esters may be recycled or waste products, for example, waste cooking oil and the like may be used. Further, as fatty acid esters in which the alcohol is glycerin, in addition to triglycerides, monoglycerides and diglycerides may also be used. The fatty acid moiety of the fatty acid ester preferably has a carbon number of 8 or more, more preferably 12 or more, and preferably 24 or less, more preferably 18 or less. When the fatty acid moiety of the fatty acid ester has a carbon number of 8 or more, the fatty acid ester is present in the reaction field during thermal decomposition and can sufficiently exert its effect, and the amount of hydrogen generated when the fatty acid ester is decomposed increases, so that more hydrogen can be supplied to the liquid polymer, thereby promoting the decomposition of the liquid polymer. Further, when the fatty acid moiety of the fatty acid ester has a carbon number of 24 or less, it is easily miscible with the liquid polymer.

As the hydrocarbon, examples include liquid paraffin, microcrystalline wax, asphalt-mixed naphthenic oil, polyethylene, polypropylene, and the like. Among these, liquid paraffin and microcrystalline wax are preferred, and microcrystalline wax is more preferred. The hydrocarbon preferably has a carbon number of 12 or more, more preferably 20 or more, and preferably 80 or less, more preferably 60 or less. When the hydrocarbon has a carbon number of 12 or more, the hydrocarbon is present in the reaction field during thermal decomposition and can sufficiently exert its effect, and the amount of hydrogen generated when the hydrocarbon is decomposed increases, so that more hydrogen can be supplied to the liquid polymer, thereby promoting the decomposition of the liquid polymer. Further, when the hydrocarbon has a carbon number of 80 or less, it is easily miscible with the liquid polymer.

### (Reaction Conditions, etc.)

In the method for decomposing an organic material according to the present embodiment, after the above-described heating, thermal decomposition is performed at 450°C to 950°C under an inert gas atmosphere (thermal decomposition step). By performing the thermal decomposition at 450°C or higher, the decomposition reaction rate of diene rubber in crosslinked rubber or uncrosslinked rubber or diene-based liquid polymer is improved, and the yield of C4-C10 chemicals (particularly diene-based monomers) ultimately obtained is increased. Further, by performing the thermal decomposition at 950°C or lower, gasification and aromatization of the decomposition products can be suppressed, and after decomposition, the retention rate (selectivity) of the skeleton of the constituent monomers of the diene rubber in the crosslinked rubber or uncrosslinked rubber or of the diene-based liquid polymer is improved, and the yield of C4-C10 chemicals (particularly diene-based monomers) ultimately obtained is increased. Further, for example, when the crosslinked rubber or uncrosslinked rubber contains carbon black, it can be recovered as high-quality carbon black and reused. From the viewpoint of improving the decomposition reaction rate of the organic material, the temperature of the thermal decomposition is preferably 650°C or higher. From the viewpoint of improving the selectivity of products retaining the monomer skeleton, the temperature of the thermal decomposition is preferably 850°C or lower. Therefore, by performing the thermal decomposition at 650°C to 950°C, the yield of C4-C10 chemicals (particularly diene-based monomers) obtained from the organic material is further improved, and by performing it at 650°C to 850°C, the yield of C4-C10 chemicals (particularly diene-based monomers) obtained from the organic material is further enhanced.

The time for the thermal decomposition is not particularly limited. As an example, the heating time after reaching the target temperature for the thermal decomposition is preferably 0.1 second to 5 minutes, more preferably 0.1 second to 1 minute. By performing the thermal decomposition for 0.1 second or more, the decomposition rate of the organic material is improved. On the other hand, if the decomposition time is too long, the skeleton (such as double bonds) of the constituent monomers of the diene rubber or diene-based liquid polymer may be decomposed, or the decomposition products may be gasified or aromatized, but by performing the thermal decomposition for 5 minutes or less, decomposition of the monomer skeleton and gasification or aromatization of the decomposition products can be suppressed, and after decomposition, the retention rate (selectivity) of the skeleton of the constituent monomers of the diene rubber in crosslinked rubber or uncrosslinked rubber or of the diene-based liquid polymer is improved.

The method of such rapid thermal decomposition is not particularly limited, and examples include batch type, fixed bed type, moving hearth type, rotary kiln type, fluidized bed type, jet bed type, microwave heating type, plasma heating type, high-temperature liquid spray type, single-screw extrusion type, twin-screw extrusion type, free-fall type, electrified spatiotemporal heating, wire mesh heating (Hoekstra et al., Chem. Eng. J., 191, 45 (2012)), and the like.

The heating and thermal decomposition are performed under an inert gas atmosphere. By performing the heating and thermal decomposition under an inert gas atmosphere, oxidation and reduction of the organic material and decomposition products can be suppressed, and in particular, hydrogenation of double bonds in the resulting diene-based monomers can be suppressed. Further, when the crosslinked rubber or uncrosslinked rubber contains carbon black, oxidation of the carbon black can also be suppressed. Examples of the inert gas include nitrogen, carbon dioxide, argon, helium, and the like.

In order to perform the heating and thermal decomposition under an inert gas atmosphere, for example, when using a batch-type reactor, it is sufficient to make the atmosphere charged into the reactor an inert gas, and when using a flow-type reactor, it is sufficient to make the atmosphere flowing through the reactor an inert gas. Note that hydrogen may be generated during the heating and thermal decomposition, but the hydrogen thus generated is not considered as part of the atmosphere for the heating and thermal decomposition.

The heating and thermal decomposition can be carried out at any pressure, whether under reduced pressure, atmospheric pressure, or increased pressure, but it is preferable to perform them under reduced pressure or atmospheric pressure. As an example, the pressure for the heating and thermal decomposition is preferably 1000 kPa to 65 kPa. By performing the heating and thermal decomposition under reduced pressure or atmospheric pressure, polymerization (repolymerization) of oligomers or diene-based monomers in the decomposition products can be suppressed.

A catalyst may or may not be used in the thermal decomposition, but it is preferable not to use a catalyst. By not using a catalyst in the thermal decomposition, costs can be reduced.

When a catalyst is used in the thermal decomposition, any catalyst having an effect of promoting the decomposition reaction of the organic material may be used, and it may be an acidic catalyst, a neutral catalyst, or a basic catalyst, but among these, a basic catalyst is preferred. Further, it is more preferable to perform the thermal decomposition in the presence of at least one basic catalyst selected from the group consisting of TiO₂, ZrO₂, MgO, La₂O₃, CeO₂, Y₂O₃, Li₂CO₃, Na₂CO₃, Rb₂CO₃, and Cs₂CO₃. By performing the thermal decomposition in the presence of these basic catalysts, the rate of the decomposition reaction (depolymerization reaction) of the organic material is improved, and the selectivity of products retaining the monomer skeleton is improved. These catalysts may be used alone or in combination of two or more.

The amount of the catalyst used is preferably 1 part by mass or more, more preferably 10 parts by mass or more, even more preferably 100 parts by mass or more, and preferably 8000 parts by mass or less, more preferably 4000 parts by mass or less, even more preferably 500 parts by mass or less, per 100 parts by mass of the organic material. If the amount of the catalyst used is 100 parts by mass or more per 100 parts by mass of the organic material, the decomposition reaction proceeds further, and if the amount of the catalyst used is 500 parts by mass or less per 100 parts by mass of the organic material, it is preferable from the viewpoint of cost.

When the thermal decomposition is performed, for example, under increased pressure, the organic material may be thermally decomposed in a solvent. Here, as the solvent, any solvent that does not inhibit the decomposition reaction may be used, and examples include ethers, aliphatic hydrocarbons, alicyclic hydrocarbons, aromatic hydrocarbons (aromatic solvents), and the like. More specifically, as the solvent, tetrahydrofuran (THF), hexane, cyclohexane, pentane, cyclopentane, toluene, and xylene are preferred, and toluene and tetrahydrofuran are more preferred.

The amount of the solvent used is preferably 10 mL or more, more preferably 50 mL or more, and preferably 500 mL or less, more preferably 200 mL or less, per 1 g of the organic material. If the amount of the solvent used is 10 mL or more per 1 g of the organic material, the decomposition reaction proceeds further, and if the amount of the solvent used is 500 mL or less per 1 g of the organic material, it is preferable from the viewpoint of cost.

### (Decomposition Products)

In the method for decomposing an organic material according to the present embodiment, by the thermal decomposition, C4-C10 chemicals, particularly diene-based monomers, and the like can be obtained as decomposition products.

In the method for decomposing an organic material according to the present embodiment, it is preferable that the decomposition products obtained by the thermal decomposition contain 15 mass% or more of C4-C10 chemicals, more preferably 20 mass% or more, even more preferably 25 mass% or more, and particularly preferably 40 mass% or more. By increasing the yield of C4-C10 chemicals, the economic and environmental value of the decomposition method is further improved.

Further, the C4-C10 chemicals as decomposition products vary depending on the type of the diene rubber in the crosslinked rubber or uncrosslinked rubber or of the diene-based liquid polymer to be decomposed, but examples include, in addition to the diene-based monomers described later, dimers of monomers such as limonene, monocyclic aromatic compounds such as benzene and toluene, and the like, with diene-based monomers and limonene being preferred. The proportion of C4-C10 chemicals in the decomposition products can be controlled, for example, by the reaction conditions such as the reaction temperature and reaction time of the thermal decomposition.

Further, in the method for decomposing an organic material according to the present embodiment, it is preferable that the decomposition products obtained by the thermal decomposition contain 15 mass% or more of diene-based monomers, more preferably 20 mass% or more, even more preferably 25 mass% or more, and particularly preferably 40 mass% or more. By increasing the yield of diene-based monomers, the economic and environmental value of the decomposition method is further improved.

Further, the diene-based monomers as decomposition products vary depending on the type of the diene rubber in the crosslinked rubber or uncrosslinked rubber or of the diene-based liquid polymer to be decomposed, but examples include 1,3-butadiene, isoprene, 1,3-pentadiene, 2,3-dimethyl-1,3-butadiene, and the like, with 1,3-butadiene and isoprene being preferred. The proportion of diene-based monomers in the decomposition products can be controlled, for example, by the reaction conditions such as the reaction temperature and reaction time of the thermal decomposition.

### (Others)

The method for decomposing an organic material according to the present embodiment may further include another step in addition to the above-described heating and thermal decomposition. Examples of such steps include pretreatment steps for crosslinked rubber or uncrosslinked rubber (for example, cutting step, pulverizing step), pretreatment steps for diene-based liquid polymer (for example, purification steps such as solid-liquid separation), and the like.

Further, when the crosslinked rubber or uncrosslinked rubber contains carbon black and/or sulfur, it is preferable to include a step of recovering carbon black and/or sulfur from the decomposition products (intermediate decomposition products) after the thermal decomposition.

Further, the method for decomposing an organic material according to the present embodiment can be carried out using either a batch-type reactor or a flow-type reactor.

Further, the decomposition products after the decomposition reaction can be separated and recovered by filtration, distillation, centrifugation, or the like, or recovered by precipitation using a poor solvent, and can be reused. Further, the C4-C10 chemicals ultimately obtained from the organic material can be reused as raw materials for various products. Further, the diene-based monomers ultimately obtained from the organic material can be reused as raw materials for diene rubber (diene-based polymer).

### EXAMPLES

The present disclosure will be described in more detail below with reference to examples, but the present disclosure is not limited in any way to the following examples.

### (Preparation of Crosslinked Rubber Sample)

A rubber composition was prepared by compounding, per 100 parts by mass of natural rubber, 50 parts by mass of carbon black, 1.0 part by mass of antioxidant 6PPD [N-phenyl-N'-(1,3-dimethylbutyl)-p-phenylenediamine], 2.0 parts by mass of stearic acid, 2.5 parts by mass of zinc oxide, 1.5 parts by mass of vulcanization accelerator (N-cyclohexyl-2-benzothiazolylsulfenamide), and 4.5 parts by mass of sulfur, and the rubber composition was heat-crosslinked to prepare crosslinked rubber.

The obtained crosslinked rubber was cut into a shape of 6 mm × 10 mm × 2 mm to prepare a crosslinked rubber sample.

### (Examples 1 to 3)

A reaction tube was charged with 0.1 g of the crosslinked rubber sample, and quartz wool was packed on the upstream and downstream sides. The upstream side of the reaction tube was provided with a helium introduction line, and the downstream side was provided with a cooling trap filled with chloroform (60% ethylene glycol aqueous solution, cooled to -20°C), and the gas passing through the trap was collected in a gas bag.

Under a helium flow rate of 50 mL/min, the crosslinked rubber sample in the reaction tube was slid into the heating zone of an electric furnace heated to 500°C, 600°C, or 700°C, and heated at the respective temperature for 3 minutes to perform thermal decomposition. At this time, the temperature of the crosslinked rubber sample was monitored with a thermocouple to determine the heating rate.

After completion of the reaction, the reaction tube was cooled, and the products deposited in the reaction tube and trap were recovered, and the gaseous products were recovered in the gas bag. The mass ratio (yield) of each product relative to the crosslinked rubber sample including carbon black is presented in Table 1.

Further, by gas chromatography (GC), the yields of isoprene, limonene, toluene, xylene, other aromatic compounds, and other aliphatic compounds in the liquid products were measured, and the total yield of C4-C10 chemicals was determined.

### (Comparative Examples 1 to 3)

A reaction tube was charged with 0.1 g of the crosslinked rubber sample, and quartz wool was packed on the upstream and downstream sides. The upstream side of the reaction tube was provided with a helium introduction line, and the downstream side was provided with a cooling trap filled with chloroform (60% ethylene glycol aqueous solution, cooled to -20°C), and the gas passing through the trap was collected in a gas bag.

Under a helium flow rate of 50 mL/min, the electric furnace heated to 500°C, 600°C, or 700°C was slid to the portion of the reaction tube packed with the crosslinked rubber sample, and heated at the respective temperature for 3 minutes to perform thermal decomposition. At this time, the temperature of the crosslinked rubber sample was monitored with a thermocouple to determine the heating rate.

After completion of the reaction, the reaction tube was cooled, and the products deposited in the reaction tube and trap were recovered, and the gaseous products were recovered in the gas bag. The mass ratio (yield) of each product relative to the crosslinked rubber sample including carbon black is presented in Table 1.

Further, by gas chromatography (GC), the yields of isoprene, limonene, toluene, xylene, other aromatic compounds, and other aliphatic compounds in the liquid products were measured, and the total yield of C4-C10 chemicals was determined.

### (Examples 4 to 6)

A reaction tube was packed with 0.1 g of a liquid rubber sample (liquid polyisoprene LIR-30, manufactured by Kuraray Co., Ltd.) wrapped in quartz wool (manufactured by Tosoh Corporation, fine fiber diameter: 2-6 µm), and quartz wool was also packed on the upstream and downstream sides. The upstream side of the reaction tube was provided with a helium introduction line, and the downstream side was provided with a cooling trap filled with chloroform (60% ethylene glycol aqueous solution, cooled to -20°C), and the gas that passed through the trap was collected in a gas bag.

Under the condition of a helium flow rate of 50 mL/min, the liquid rubber sample in the reaction tube was slid into the heated region of an electric furnace heated to 500°C, 600°C, or 700°C, and subjected to thermal decomposition by heating at the respective temperature for 3 minutes. At this time, the temperature of the liquid rubber sample was monitored with a thermocouple, and the heating rate was determined.

After completion of the reaction, the reaction tube was cooled, the products deposited in the reaction tube and trap were collected, and the gaseous products were collected in a gas bag. The mass ratios (yields) of each product are presented in Table 2.

Furthermore, by gas chromatography (GC), the yields of isoprene, limonene, toluene, xylene, other aromatic compounds, and other aliphatic compounds in the liquid products were measured, and the total yield of C4-C10 chemicals was determined.

The results are summarized in Table 2.

**[Table 1]**

| | | | Example 1 | Example 2 | Example 3 | Comparative Example 1 | Comparative Example 2 | Comparative Example 3 |
|---|---|---|---|---|---|---|---|---|
| Sample form | | | Solid rubber | Solid rubber | Solid rubber | Solid rubber | Solid rubber | Solid rubber |
| Heating rate from 100°C to 450°C | | °C/min | 1583 | 1829 | 2759 | 433 | 615 | 728 |
| Heating rate from 100°C to 600°C | | °C/min | - | 1829 | 2759 | - | 615 | 728 |
| Decomposition temperature | | °C | 500 | 600 | 700 | 500 | 600 | 700 |
| Yield of gaseous products *1 | | Mass% | 1.1 | 3.1 | 6.9 | 1.5 | 4.0 | 5.1 |
| Yield of liquid products *2 | | Mass% | 16.3 | 16.9 | 28.9 | 12.3 | 13.9 | 12.3 |
| (Breakdown) | Yield of isoprene | Mass% | 6.3 | 9.6 | 16.8 | 7.9 | 9.7 | 8.3 |
| | Yield of limonene | Mass% | 7.0 | 2.1 | 0.0 | 3.7 | 1.0 | 0.6 |
| | Yield of toluene | Mass% | 1.2 | 1.5 | 7.2 | - | 1.0 | 1.7 |
| | Yield of xylene | Mass% | 0.4 | 1.3 | 3.1 | 0.1 | 1.2 | 1.6 |
| | Yield of other C4-C10 aromatic compounds | Mass% | 0.2 | 1.3 | 1.2 | Less than 0.05 | 0.4 | 0.1 |
| | Yield of other C11 or higher aromatic compounds | Mass% | 0.5 | 0.5 | 0.1 | 0.1 | Less than 0.1 | - |
| | Yield of other aliphatic compounds | Mass% | 0.7 | 0.6 | 0.5 | 0.5 | 0.6 | - |
| Total yield of C4-C10 compounds | | Mass% | 15.1 | 15.8 | 28.3 | 11.7 | 13.3 | 12.3 |
| Yield of oligomers *3 | | Mass% | 49.6 | 42.5 | 23.5 | 52.7 | 49.5 | 49.7 |
| Yield of solid products *4 | | Mass% | 1.8 | 6.1 | 9.4 | 2.2 | 1.4 | 1.5 |
| Yield of carbon black *5 | | Mass% | 31.3 | 31.3 | 31.3 | 31.3 | 31.3 | 31.3 |

| | | | | | | | | |
|---|---|---|---|---|---|---|---|---|
| - : Not detected | | | | | | | | |

**[Table 2]**

| | | | Example 4 | Example 5 | Example 6 |
|---|---|---|---|---|---|
| Sample form | | | Liquid polymer | Liquid polymer | Liquid polymer |
| Heating rate from 100°C to 450°C | | °C/min | 1538 | 1589 | 2190 |
| Heating rate from 100°C to 600°C | | °C/min | - | 1589 | 2190 |
| Decomposition temperature | | °C | 500 | 600 | 700 |
| Yield of gaseous products * 1 | | Mass% | 0.6 | 3.5 | 11.9 |
| Yield of liquid products *2 | | Mass% | 19.3 | 28.8 | 37.9 |
| (Breakdown) | Yield of isoprene | Mass% | 13.8 | 17.6 | 21.5 |
| | Yield of limonene | Mass% | 5.3 | 6.5 | - |
| | Toluene | Mass% | - | 1.4 | 6.7 |
| | Xylene | Mass% | - | 1.1 | 4.6 |
| | Yield of other C4-C10 aromatic compounds | Mass% | - | 0.6 | 3.5 |
| | Yield of other C11 or higher aromatic compounds | Mass% | - | Less than 0.1 | 0.5 |
| | Yield of other aliphatic compounds | Mass% | 0.2 | 1.6 | 1.1 |
| Total yield of C4-C10 compounds | | Mass% | 19.1 | 27.2 | 36.3 |
| Yield of oligomers *3 | | Mass% | 77.0 | 64.2 | 46.1 |
| Yield of solid products *4 | | Mass% | 3.1 | 3.4 | 4.1 |

| | | | | | |
|---|---|---|---|---|---|
| - : Not detected *1 Yield of gaseous products: Value calculated from the amount of descomposition products collected in the gas bag *2 Yield of liquid products: Value calculated from the amount of components that could be qualitatively analyzed by gas chromatography (Gc) among the total amount of (1) descomposition products collected in the cooling trap and (2) components adhering to the reaction tube that were dissolved in chloroform *3 Yield of oligomers: Value calculated from the amount of components that could not be qualitatively analyzed by gas chromatography (GC) among the total amount of (1) decomposition products collected in the cooling trap and (2) components adhering to the reaction tube that were dissolved in chloroform *4 Yield of solid products: Value calculated from the sum of (1) the amount obtained by subtracting the content of carbon black in the crosslinked rubber sample from the residue of the thermal decomposition reaction and (2) the amount of components adhering to the reaction tube that were not dissolved in chloroform *5 Yield of carbon black: Calculated value based on the content of carbon black in the crosslinked rubber sample | | | | | |

From Tables 1 and 2, it can be understood that, according to the method for decomposing an organic material of the present disclosure, C4-C10 chemicals, particularly isoprene (a diene-based monomer), can be obtained at a high yield.

## Claims

1. A method for decomposing an organic material comprising heating an organic material selected from crosslinked rubber containing diene rubber, uncrosslinked rubber containing diene rubber, and a diene-based liquid polymer under an inert gas atmosphere, at a heating rate of 800°C/min or more from 100°C to 450°C, and performing thermal decomposition at 450°C to 950°C.

2. A method for decomposing an organic material comprising heating an organic material selected from crosslinked rubber containing diene rubber, uncrosslinked rubber containing diene rubber, and a diene-based liquid polymer under an inert gas atmosphere, at a heating rate of 800°C/min or more from 100°C to 600°C, and performing thermal decomposition at 650°C to 950°C.

3. A method for decomposing an organic material comprising heating an organic material selected from crosslinked rubber containing diene rubber, uncrosslinked rubber containing diene rubber, and a diene-based liquid polymer under an inert gas atmosphere, at a heating rate of 2000°C/min or more from 100°C to 450°C, and performing thermal decomposition at 450°C to 950°C.

4. A method for decomposing an organic material comprising heating an organic material selected from crosslinked rubber containing diene rubber, uncrosslinked rubber containing diene rubber, and a diene-based liquid polymer under an inert gas atmosphere, at a heating rate of 2000°C/min or more from 100°C to 600°C, and performing thermal decomposition at 650°C to 950°C.

5. The method for decomposing an organic material according to any one of claims 1 to 4, wherein the thermal decomposition is performed at 650°C to 850°C.

6. The method for decomposing an organic material according to any one of claims 1 to 4, wherein a decomposition product obtained by the thermal decomposition contains 15 mass% or more of a diene-based monomer.

7. The method for decomposing an organic material according to any one of claims 1 to 4, wherein the diene rubber contains at least one selected from the group consisting of isoprene skeleton rubber, styrene-butadiene rubber, and butadiene rubber.

8. The method for decomposing an organic material according to any one of claims 1 to 4, wherein the diene rubber contains 30 mass% or more of isoprene skeleton rubber.

9. The method for decomposing an organic material according to any one of claims 1 to 4, wherein the crosslinked rubber or the uncrosslinked rubber further contains carbon black.

10. The method for decomposing an organic material according to any one of claims 1 to 4, wherein the crosslinked rubber or the uncrosslinked rubber further contains sulfur.
